# EUROPÄISCHE PATENTSCHRIFT

(11) **EP 1 511 272 B1**
(45) Veröffentlichungstag und Bekanntmachung des Hinweises auf die Patenterteilung: **01.02.2006**
(21) Anmeldenummer: 04102772.3
(22) Anmeldetag: 17.06.2004
(51) Int. Cl.: H04L 29/06

(54) **Verfahren zum Zuordnen von über mehrere Netzwerke verteilten Clients zu einem Server und Client zur Durchführung des Verfahrens**
Server assignment method for clients distributed in more than one networks and client for the server assignmend method
Procedé d' attribution de serveur pour le clients repartis dans plusieurs resaux et client pour cette precedé

(30) Priorität: 25.08.2003 DE 10339051
(43) Veröffentlichungstag der Anmeldung: 02.03.2005
(73) Patentinhaber: SIEMENS AKTIENGESELLSCHAFT, 80333 München (DE)
(72) Erfinder: Berndt, Stefan, 59199 Bönen (DE); Hanna, Thomas, 32758 Detmold (DE); Laux, Thorsten, 33104 Paderborn (DE); Scheering, Christian, 33689 Bielefeld (DE)

(56) Entgegenhaltungen:
- EP-A- 1 339 190
- US-A1- 2003 061 315
- GUTTMAN E: "Service Location Protocol: Automatic Discovery of IP Network Services" IEEE INTERNET COMPUTING, IEEE SERVICE CENTER, PISCATAWAY, NJ, US, Bd. 3, Nr. 4, 1. Juli 1999 (1999-07-01), Seiten 71-80, XP002140936 ISSN: 1089-7801

## Beschreibung

Zeitgemäße Kommunikations- oder Datenverarbeitungssysteme sind häufig über mehrere Subnetze, z.B. sogenannte lokale Netze (LAN) verteilt, die ihrerseits zu größeren Netzwerken, z.B. über Weitverkehrsnetze (WAN) vernetzt sind. Ein wichtiges Architekturprinzip solcher verteilter Kommunikations- oder Datenverarbeitungssysteme ist das sogenannte Client-Server-Prinzip. Als Server wird hierbei eine Einrichtung bezeichnet, die in einem verteilten System zentrale Dienste für mehrere im Netzwerk verteilte Dienstnutzer, sogenannte Clients anbietet. Clients und Server arbeiten im allgemeinen autonom, d.h. ein Server bietet seine Dienste unabhängig vom jeweiligen Client an. Ein Client kann nur solche Dienste in Anspruch nehmen, die ein verfügbarer Server anbietet, wobei der Client nach einer Nutzung eines Dienstes keinen Einfluss mehr auf die Abarbeitung durch den Server hat.

Zur Nutzung der von einem Server angebotenen Dienste durch Clients ist es erforderlich, dass der Server die Clients oder die Clients den Server kennen und adressieren können. D.h. als Grundlage einer Interaktion zwischen Client und Server, sind die betreffenden Clients dem Server zuzuordnen.

In vielen Fällen, insbesondere in internetprotokollbasierten Netzwerken, wird die Zuordnung eines Servers zu Clients durch manuelle Konfiguration der betreffenden Clients oder des Servers vorgenommen. In der Regel werden hierbei im Server die Internetprotokolladressen der einzelnen Clients oder in den Clients die Internetprotokolladresse des Servers konfiguriert. Auf diese Weise sind die Clients und der Server einander a priori zugeordnet. Eine derartige manuelle Konfiguration erfordert jedoch insbesondere in großen Netzwerken mit ei ner hohen Anzahl potentieller Clients einen beträchtlichen Aufwand. Hinzu kommt, dass bei jeder Änderung der Zuordnung, z.B. durch Umschaltung auf einen neuen Server oder ein Hinzufügen neuer Clients eine erneute manuelle Konfiguration erforderlich ist.

Aufgrund des hohen Aufwands einer manuellen Konfiguration werden in zunehmendem Maße automatisierte Zuordnungsverfahren, sogenannte Autodiscovery-Verfahren eingesetzt. Ein häufig verwendetes Verfahren basiert darauf, dass sogenannte DHCP-Server (DHCP: Dynamic Host Configuration Protocol) derart konfiguriert werden, dass sie auf Anfrage Client- oder Serveradressen zur Verfügung stellen können. Ein solches Verfahren setzt jedoch voraus, dass entsprechend konfigurierte DHCP-Server in jedem Subnetz verfügbar sind und subnetzübergreifend koordiniert werden. Hierbei sind bei jeder Änderung der Client-Server-Zuordnung Konfigurationsdaten in den DHCP-Servern entsprechend zu aktualisieren. DHCP-Server sind beispielsweise aus dem Internetdokument "Request for Comments: 2131, Dynamic Host Configuration Protocol" von R. Droms, datiert vom März 1997, bekannt.

US 2003/061315 A1 offenbart das Plug and Play Host Protocol PPHP wobei Subnet Relay Agents die Suche weitergeben.

Es ist Aufgabe der vorliegenden Erfindung ein Verfahren zum Zuordnen von über mehrere Subnetze verteilten Clients zu einem Server anzugeben, das einen geringeren Konfigurationsaufwand erfordert. Es ist weiterhin Aufgabe der Erfindung einen Client zur Durchführung des Verfahrens anzugeben.

Gelöst wird diese Aufgabe durch ein Verfahren mit den Merkmalen des Patentanspruchs 1 und durch einen Client mit den Merkmalen des Patentanspruchs 7.

Beim erfindungsgemäßen Verfahren wird zum Zuordnen von über mehrere Subnetze, z.B. lokale Netze, verteilten Clients zu einem Server in einem jeweiligen Subnetz einer der Clients ausgewählt. Erfindungsgemäß wird durch einen jeweiligen ausgewählten Client subnetzübergreifend nach anderen ausgewähl ten Clients sowie nach dem Server gesucht, wobei der ausgewählte Client bei Auffinden des Servers eine diesen identifizierende Server-Adressinformation speichert und bei Auffinden eines anderen ausgewählten Clients von diesem die Server-Adressinformation abfragt und bei Erhalt speichert. Die gespeicherte Server-Adressinformation wird vom ausgewählten Client an einen oder mehrere andere ausgewählte oder nicht ausgewählte Clients übermittelt.

Durch das erfindungsgemäße Verfahren kann die Suche nach dem Server von mehreren ausgewählten Clients verschiedener Subnetze parallel ausgeführt werden. Aufgrund der parallelen Suche kann der Server in der Regel sehr schnell von einem der ausgewählten Clients aufgefunden werden. Der zu suchende Server muss zur Durchführung des Verfahrens nicht modifiziert werden. Ein jeweiliger ausgewählter Client kann den Server z.B. durch Abfragen eines einem zu nutzenden Dienst zugeordneten Server-Ports erkennen. Sobald der Server durch einen der ausgewählten Clients gefunden wird, kann die Server-Adressinformation, ausgehend von diesem ausgewählten Client, über andere ausgewählte oder nicht ausgewählte Clients kaskadenartig und damit sehr schnell, subnetzübergreifend an die Clients verteilt werden, die auf diese Weise dem gefundenen Server zugeordnet werden.

Die Erfindung erlaubt eine dezentrale und im Wesentlichen selbstorganisierende Client-Server-Zuordnung. Insbesondere sind keine zentralen Informationsdienste wie DHCP oder eine manuelle Konfiguration oder Rekonfiguration der Clients, des Servers oder anderer Netzwerkkomponenten erforderlich.

Ein weiterer Vorteil der Erfindung besteht darin, dass die Durchführung der aktiven Suche nach dem Server auf ausgewählte Clients beschränkt werden kann, was eine wesentlich geringere Netzbelastung erzeugt, als wenn alle Clients den Server suchten.

Das erfindungsgemäße Verfahren zeichnet sich weiterhin durch geringe Latenz- bzw. Rekonfigurationszeiten bei einer Neuankopplung von Clients oder eines neuen Servers aus, da es für neu angekoppelte Clients zum Erhalt der Server-Adressinformation bereits ausreicht, anstelle des Servers selbst, einen ausgewählten Client, der die Server-Adressinformation bereits erhalten hat, zu finden. Falls der ausgewählte Client des eigenen Subnetzes bereits die Server-Adressinformation erhalten hat, kann ein an dieses Subnetz neu angekoppelter Client auf besonders einfache Weise mit der Server-Adressinformation versorgt werden.

Vorteilhafte Ausführungsformen und Weiterbildungen der Erfindung sind in den abhängigen Ansprüchen angegeben.

Die Übermittlung der gespeicherten Server-Adressinformation zu dem mindestens einen ausgewählten oder nicht ausgewählten anderen Client kann insbesondere durch eine von diesem Client ausgehende Abfrage veranlasst werden. Vorzugsweise wird die Server-Adressinformation vom ausgewählten Client an alle dem Server zuzuordnenden Clients seines eigenen Subnetzes und/oder an alle ihm bekannten ausgewählten Clients außerhalb seines Subnetzes, jeweils eigeninitiativ oder infolge einer Abfrage übermittelt. Eine Übermittlung der Server-Adressinformation an möglichst viele andere Clients erlaubt eine sehr schnelle subnetzübergreifend kaskadenartige Verteilung der Server-Adressinformation.

Vorzugsweise kann der ausgewählte Client beim Auffinden eines anderen ausgewählten Clients eine diesen identifizierende Client-Adressinformation speichern. Eine solche Client-Adressinformation kann an andere, ggf. anfragende Clients weitergegeben werden. Durch eine subnetzübergreifende Verteilung von Client-Adressinformationen an ausgewählte Clients können diese ein Topologiebild ihrer Subnetzumgebung erstellen und für eine subnetzübergreifende Kommunikation nutzen. Weiterhin kann der ausgewählte Client infolge eines Erhalts der Server-Adressinformation diese an einen oder mehrere durch eine oder mehrere gespeicherte Client-Adressinformationen identifizierte, ausgewählte Clients übermitteln.

Nach einer vorteilhaften Ausgestaltung des erfindungsgemäßen Verfahrens kann die Clientauswahl in einem Subnetz durch dessen Clients vorgenommen werden. Die Clients eines Subnetzes können vorzugsweise autark unter sich oder unter Clients anderer Subnetze einen Client auswählen. Zur Auswahl eines Clients ist somit keine externe Konfiguration erforderlich.

Nach einer weiteren vorteilhaften Ausführungsform der Erfindung kann ein ausgewählter, erster Client bei Auffinden eines in einem anderen Subnetz befindlichen, nicht ausgewählten Clients, diesen dazu veranlassen, zu dem in dessen Subnetz ausgewählten, zweiten Client eine Abfrage der Server-Adressinformation zu übermitteln. Zu diesem Zweck kann der nicht ausgewählte Client den zweiten Client entsprechend informieren, sodass dieser die Beantwortung der Abfrage gegenüber dem ersten Client übernimmt und bei Kenntnis der Server-Adressinformation diese dem ersten Client übermittelt. Alternativ dazu kann der nicht ausgewählte Client selbst den zweiten Client abfragen und eine gegebenenfalls erhaltene Server-Adressinformation zum ersten Client weiterleiten. Nach einer weiteren Alternative kann der nicht ausgewählte Client eine den zweiten Client identifizierende Client-Adressinformation zum ersten Client übermitteln, sodass dieser den zweiten Client direkt abfragen kann.

Ein Ausführungsbeispiel der Erfindung wird nachfolgend anhand der Zeichnung näher erläutert, dabei zeigen jeweils in schematischer Darstellung:
Figur 1 einen erfindungsgemäßen Client und
die Figuren 2-5 ein mehrere Subnetze umfassendes Netzwerk in verschiedenen Verfahrensstadien

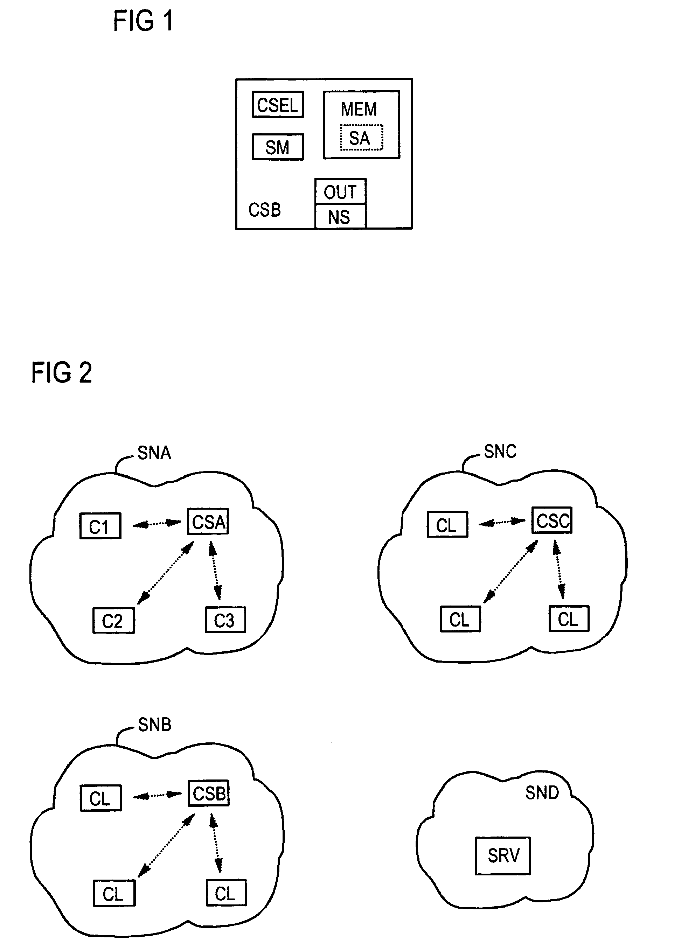

In den **Figuren 2-5** ist jeweils ein mehrere Subnetze SNA, SNB, SNC und SND umfassendes Netzwerk schematisch dargestellt. Für das vorliegende Ausführungsbeispiel sei angenommen, dass die Subnetze SNA,...., SND durch internetprotokollbasierte lokale Netze, sogenannte LANs (LAN: Local Area Network) realisiert sind, die über ein Weitverkehrsnetz (nicht dargestellt), wie z.B. das Internet miteinander gekoppelt sind. Das Subnetz SND weist hierbei einen Server SRV auf, der einen Dienst, z.B. einen Kommunikations-, Datenverarbeitungs- und/oder Informationsdienst über einen vorgegebenen oder dynamisch zugewiesenen Server-Port im Netzwerk zur Verfügung stellt. Weiterhin umfasst jeweils das Subnetz SNA Clients C1, C2, C3 und CSA, das Subnetz SNB Clients CL und CSB, sowie das Subnetz SNC Clients CL und CSC. Die Clients CSA, CSB, CSC, C1, C2, C3 und CL benötigen den vom Server SRV bereitgestellten Dienst und sind ihm in diesem Sinne zuzuordnen. Zur Zuordnung der Clients CSA,...,CL zum Server SRV ist es erforderlich, dass die Clients CSA,...,CL eine den Server SRV identifizierende Adressinformation SA, im vorliegenden Ausführungsbeispiel eine Internetprotokolladresse des Servers SRV, kennen. Die Internetprotokolladresse SA des Servers SRV, im Folgenden meist als IP-Adresse bezeichnet, wird den Clients CSA, ..., CL mittels des erfindungsgemäßen Verfahrens übermittelt.

In **Figur 1** ist ein erfindungsgemäßer Aufbau des Clients CSB schematisch dargestellt. Der Client CSB verfügt zur Ankopplung an das Subnetz SNB über eine Netzschnittstelle NS. Weiterhin weist der Client CSB ein Auswahlmodul CSEL auf zum Auswählen eines Clients aus allen oder einer vorgegebenen Gruppe von an dasselbe Subnetz, hier SNB, wie der Client CSB angeschlossenen Clients CL und CSB. Die Auswahl erfolgt durch ein Zusammenwirken der Auswahlmodule CSEL aller an der Auswahl beteiligten Clients CSB und CL mittels bekannter, sogenannter Selektionsverfahren. Ein derartiges Selektionsverfahren ist beispielsweise aus dem am 7.8.2003 über das Internet unter der Adresse "http://www.cs.cornell.edu/home/rvr/papers/ProbLeaderElection.pdf" frei zugänglichen Dokument "A Probalbilistically Correct Leader Election Protocol for Large Groups", von Gupta, van Renesse und Birman, datiert vom April 2000 bekannt.

Für das vorliegende Ausführungsbeispiel sei angenommen, dass durch die gemeinsam durch die Clients CSB und CL ausgeführte Wahl im Subnetz SNB der Client CSB ausgewählt wird. Analog dazu sei angenommen, dass im Subnetz SNA der Client CSA durch die Clients C1, C2, C3 und CSA und im Subnetz SNC der Client CSC durch die Clients CL und CSC ausgewählt wird. Damit ist in jedem der Subnetze SNA, SNB und SNC genau ein Client CSA, CSB bzw. CSC ausgewählt. Dementsprechend werden im Folgenden die Clients CSA, CSB und CSC als ausgewählte Clients und die Clients C1, C2, C3 und CL als nicht ausgewählte Clients bezeichnet. Ein jeweiliger ausgewählter Client CSA, CSB bzw. CSC ist den nicht ausgewählten Clients seines Subnetzes SNA, SNB bzw. SNC nach seiner Auswahl - wie in **Figur 2** durch punktierte Doppelpfeile angedeutet - zugeordnet. Ein jeweiliger ausgewählter Client CSA, CSB bzw. CSC kann nach seiner Auswahl anderen Komponenten, z.B. nicht ausgewählten Clients seines Subnetzes SNA, SNB bzw. SNC Informationen vorzugsweise mittels einer sog. Broadcast-Meldung übermitteln.

Der in Figur 1 dargestellte Client CSB verfügt weiterhin über ein Suchmodul SM zum subnetzübergreifenden Suchen nach dem Server SRV sowie nach in anderen Subnetzen, hier SNA und SNC, ausgewählten Clients, hier CSA und CSC. Weiterhin weist der Client CSB einen Speicher MEM auf, um die IP-Adresse SA des Servers SRV zu speichern, falls der Server SRV gefunden wird, oder die IP-Adresse SA von einem gefundenen, ausgewählten Client übermittelt wird. Weiterhin umfasst der Client CSB ein Ausgabemodul OUT, um die eventuell gespeicherte Server-IP-Adresse SA zu ausgewählten Clients CSA, CSC anderer Subnetze SNA, SNC sowie zu den nicht ausgewählten Clients CL des eigenen Subnetzes SNB zu übermitteln. Die Clients CSA und CSC weisen im Wesentlichen die gleiche Struktur auf wie der in Figur 1 dargestellte Client CSB.

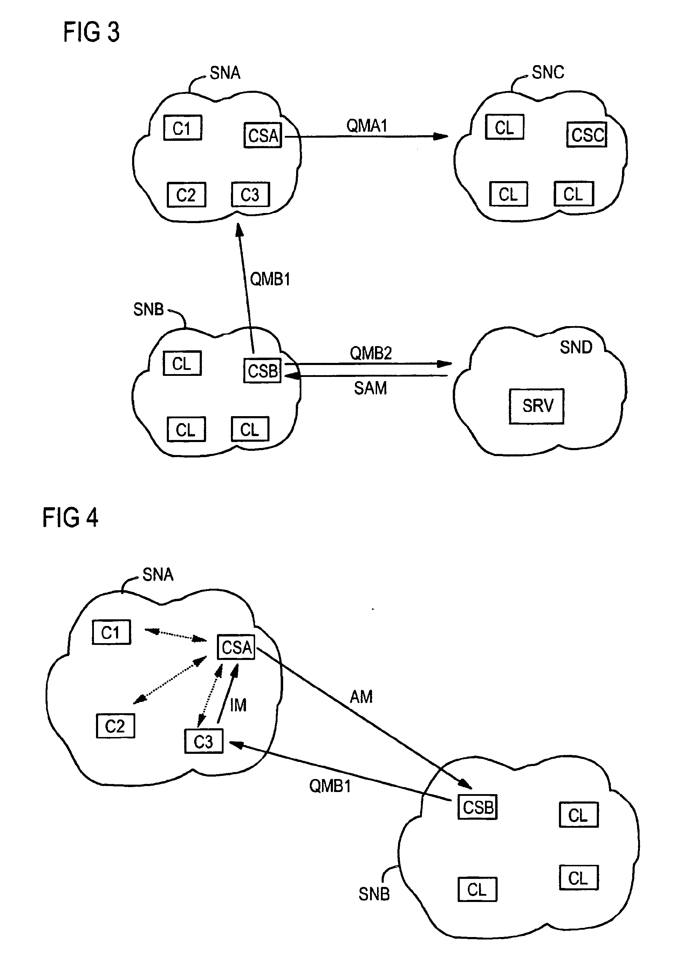

**Figur 3** veranschaulicht die von den ausgewählten Clients CSA, CSB und CSC nach ihrer jeweiligen Auswahl durchgeführte subnetzübergreifende Suche. Im vorliegenden Ausführungsbeispiel veranlasst das Suchmodul SM des Clients CSB im Rahmen von dessen Suche eine Übermittlung einer ersten Abfragemeldung QMB1 in das Subnetz SNA und einer zweiten Abfragemeldung QMB2 in das Subnetz SND. Unabhängig davon übermittelt der ausgewählte Client CSA eine Abfragemeldung QMA1 in das Subnetz SNC. Die Abfragemeldungen QMA1, QMB1 und QMB2 können vorzugsweise an die Portnummer des oben erwähnten Server-Ports, über den der Server SRV seinen Dienst bereitstellt, gerichtet sein. Parallel dazu überwachen die ausgewählten Clients CSA, CSB und CSC selbst diese Portnummer, um analoge Abfragen anderer Clients geeignet zu bedienen.

Ein ausgewählter Client, z.B. CSB kann bei seiner Suche außerhalb des eigenen Subnetzes auf unterschiedliche Typen von Clients treffen. Am Beispiel des durch Übermittlung der Abfragmeldungen QMB1 und QMB2 suchenden Clients CSB wird nachfolgend die weitere Verfahrensweise abhängig vom Typ des gefundenen, d.h. eine jeweilige Abfragemeldung QMB1 bzw. QMB2 empfangenden Clients dargelegt:
1. Falls ein das erfindungsgemäße Verfahren nicht unterstützender Client gefunden wird (in der Zeichnung nicht dargestellt), erkennt dies der suchende Client CSB am Fehlen einer erwarteten Reaktion und setzt seine Suche fort.
2. Falls ein nicht ausgewählter aber das erfindungsgemäße Verfahren unterstützender Client, z.B. C3 gefunden wird, antwortet dieser dem suchenden Client CSB im vorliegenden Ausführungsbeispiel nicht, sondern informiert den in seinem eigenen Subnetz SNA ausgewählten Client CSA über die Abfrage. Der informierte Client CSA übernimmt daraufhin die Beantwortung. Dieser Fall wird durch **Figur 4** weiter veranschaulicht. Gemäß Figur 4 übermittelt der ausgewählte Client CSB die an die oben erwähnte Portnummer gerichtete Abfragemeldung QMB1 an den nicht ausgewählten Client C3 des Subnetzes SNA. Der Client C3 übermittelt infolgedessen eine Informationsmeldung IM zum ausgewählten Client CSA seines Subnetzes SNA, durch die der Client CSA über die Abfrage des Clients CSB informiert wird. Der Client CSA beantwortet daraufhin die Abfrage durch Übermittlung einer Antwortmeldung AM zum Client CSB. Falls der Client CSA die Server-IP-Adresse SA bereits aufgrund eigener Abfragen kennt, übermittelt er die Server-IP-Adresse SA mit der Antwortmeldung AM zum Client CSB. Falls der Client CSA dagegen die Server-IP-Adresse nicht kennt, wird dies dem Client CSB durch eine entsprechend negative Antwortmeldung AM mitgeteilt. Bei einer negativen Antwortmeldung setzt der suchende Client CSB seine Suche fort.
3. Falls ein anderer ausgewählter Client, z.B. CSA oder CSC gefunden wird, beantwortet dieser direkt die Abfrage des Clients CSB. Falls der gefundene ausgewählte Client CSA bzw. CSC, die Server-IP-Adresse SA bereits aufgrund eigener Abfragen kennt, wird diese zum abfragenden Client CSB übertragen. Falls der gefundene Client CSA bzw. CSC die Server-IP-Adresse SA noch nicht kennt, wird entsprechend eine negative Antwortmeldung übermittelt. Bei einer negativen Antwortmeldung setzt der suchende Client CSB seine Suche fort.
   Vorzugsweise werden zwischen dem suchenden und dem gefundenen ausgewählten Client weitere Informationen ausgetauscht, um z.B. ein Topologiebild einer Netzumgebung der ausgewählten Clients zu erstellen. Vorteilhafterweise speichert der suchende Client CSB die IP-Adressen aller gefundenen, ausgewählten und/oder nicht ausgewählten Clients in seinem Speicher MEM ab.
4. Falls der ausgewählte Client CSB den Server SRV selbst findet, erkennt er dies anhand der Reaktion des Servers SRV auf seine Portabfrage und speichert infolgedessen die IP-Adresse SA des gefundenen Servers SRV im Speicher MEM ab.
   Das Auffinden des Servers SRV wird in Figur 3 veranschaulicht. In Figur 3 wird die Abfragemeldung QMB2 an den Server SRV im Subnetz SND übermittelt, woraufhin der Server SRV eine Antwortmeldung SAM zurück übermittelt, anhand der der anfragende Client CSB den Server SRV erkennt. Nach Erkennen des Servers SRV speichert der Client CSB die IP-Adresse des gefundenen Servers SRV als Server-IP-Adresse SA in seinem Speicher MEM ab.

Sobald ein ausgewählter Client, hier CSB, die Server IP-Adresse SA kennt, kann er diese zu anderen Clients übermitteln, die die übermittelte Server-IP-Adresse SA ihrerseits an weitere Clients verteilen. Auf dieser Weise wird die Server-IP-Adresse SA kaskadenartig über die Subnetze SNA, SNB und SNC verteilt.

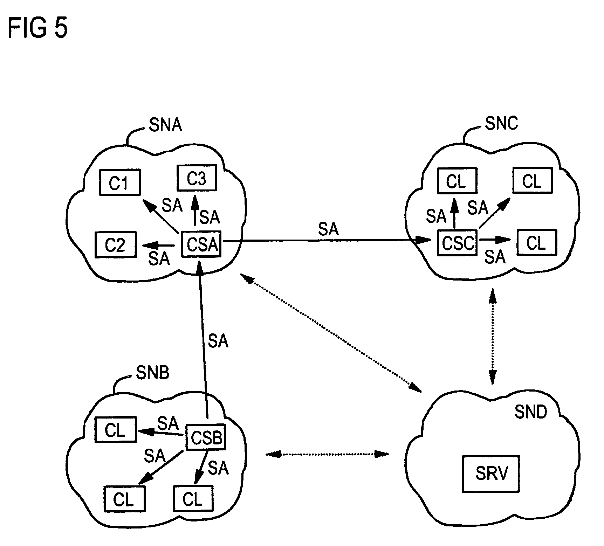

In **Figur 5** ist beispielhaft dargestellt, wie die Server-IP-Adresse SA vom ausgewählten Client CSB mittels seines Ausgabemoduls OUT an die Clients CL seines eigenen Subnetzes SNB sowie subnetzübergreifend an den ausgewählten Client CSA übermittelt wird, dessen IP-Adresse im Client CSB infolge der vorhergehenden Abfrage bekannt ist. Der Client CSA übermittelt daraufhin die Server-IP-Adresse SA an die Clients C1, C2 und C3 seines eigenen Subnetzes SNA sowie subnetzübergreifend an den ausgewählten Client CSC, der die Server IP-Adresse SA schließlich an die Clients CL seines eigenen Subnetzes CNC weiterübermittelt. Eine Übermittlung der Server-IP-Adresse SA kann beispielsweise mittels einer sog. Notify-Meldung erfolgen.

Auf diese Weise wird allen Clients CSA, CSB, CSC, C1, C2, C3 und CL des Netzwerks, die Zugriff auf den Server SRV benötigen, dessen zum Zugriff erforderliche IP-Adresse SA übermittelt. Diese Clients CSA, ..., CL werden damit dem Server SRV im Sinne einer Client-Server-Beziehung zugeordnet.

Die Erfindung erlaubt eine dezentralisiert gesteuerte und weitgehend selbstorganisiert ablaufende Zuordnung von über mehrere Subnetze verteilten Clients zu ihrem Server. Eine manuelle Konfiguration oder eine Einrichtung von zentralen Informationsdiensten, wie z.B. DNS (Domain Name System) oder DHCP erübrigen sich somit. Falls aber derartige zentrale Informationsdienste wie DNS oder DHCP im Netzwerk bereits vorhanden sind, können sie auf einfache Weise vorteilhaft in das erfinderische Konzept einbezogen werden. So können beispielsweise die ausgewählten Clients derart eingerichtet werden, dass sie außer anderen ausgewählten Clients auch zentrale DNS-Server und/oder DHCP-Server nach der IP-Adresse SA des gesuchten Servers SRV abfragen können. Gemäß einer Ausführungsvariante kann ein DNS- oder DHCP-Server so eingerichtet werden, dass er sich wie ein ausgewählter Client im Sinne des erfindungsgemäßen Verfahrens verhält. Durch die Einbeziehung vorhandener zentraler Informationsdienste, wie DNS oder DHCP, kann die Zeitdauer für die Suche nach dem Server und die Verteilung von dessen IP-Adresse weiter verringert werden.

Eine Durchführung des erfindungsgemäßen Verfahrens erfordert keine Modifikation an dem zu suchenden Server, sondern lediglich an das Verfahren unterstützenden Clients. Gemäß dem vorliegenden Ausführungsbeispiel ist ein verfahrensunterstützender Client um das Auswahlmodul CSEL zum Auswählen eines Clients des eigenen Subnetzes zu ergänzen. Weiterhin ist ein verfahrensunterstützender Client vorzugsweise derart auszugestalten, dass er einen Informationsaustausch mit dem ausgewählten Client des eigenen Subnetzes unterstützt, und dass er Anfragen ausgewählter Clients anderer Subnetze an den ausgewählten Client des eigenen Subnetzes weiterleiten kann. Bei einem auswählbaren Client ist gemäß dem vorliegenden Ausführungsbeispiel zusätzlich ein Suchmodul, hier SM, zum subnetzübergreifenden Suchen nach ausgewählten Clients sowie ein Speicher, hier MEM, zum Speichern der Server IP-Adresse SA vorzusehen. Weiterhin ist bei einem auswählbaren Client auch ein Ausgabemodul, hier OUT, vorzusehen, um die gespeicherte Server IP-Adresse SA zu anfragenden ausgewählten Clients außerhalb des eigenen Subnetzes sowie zu anfragenden Clients des eigenen Subnetzes zu übermitteln.

## Patentansprüche

1. Verfahren zum Zuordnen von über mehrere Subnetze (SNA,..,SND) verteilten Clients (CSA, CSB, CSC, C1, C2, C3, CL) zu einem Server (SRV), wobei
a) in einem jeweiligen Subnetz (SNA,..,SND) einer der Clients ausgewählt wird, und
b) ein jeweiliger ausgewählter Client (CSA, CSB, CSC)
i) subnetzübergreifend nach anderen ausgewählten Clients sowie nach dem Server (SRV) sucht,
ii) bei Auffinden des Servers (SRV) eine diesen identifizierende Server-Adressinformation (SA) speichert,
iii) bei Auffinden eines anderen ausgewählten Clients von diesem die Server-Adressinformation (SA) abfragt und bei Erhalt speichert, sowie
iv) die gespeicherte Server-Adressinformation (SA) zu mindestens einem anderen Client (CSA, CSB, CSC, C1, C2, C3, CL) übermittelt.

2. Verfahren nach Anspruch 1,
**dadurch gekennzeichnet,**
**dass** die Übermittlung der gespeicherten Server-Adressinformation (SA) zu dem mindestens einem anderen Client durch eine von diesem Client ausgehende Abfrage (QMA1, QMB1, QMB2) veranlasst wird.

3. Verfahren nach einem der vorhergehenden Ansprüche,
**dadurch gekennzeichnet,**
**dass** die Clientauswahl in einem Subnetz (SNA,..,SND) durch dessen Clients vorgenommen wird.

4. Verfahren nach einem der vorhergehenden Ansprüche,
**dadurch gekennzeichnet,**
**dass** der ausgewählte Client (CSB) bei Auffinden eines nicht ausgewählten Clients (C3), diesen dazu veranlasst, zu dem in dessen Subnetz (SNA) ausgewählten Client (CSA) eine Abfrage (IM) der Server-Adressinformation (SA) zu übermitteln.

5. Verfahren nach einem der vorhergehenden Ansprüche,
**dadurch gekennzeichnet,**
**dass** der ausgewählte Client beim Auffinden eines anderen ausgewählten Clients eine diesen identifizierende Client-Adressinformation speichert.

6. Verfahren nach Anspruch 5,
**dadurch gekennzeichnet,**
**dass** der ausgewählte Client infolge eines Erhalts der Server-Adressinformation (SA) diese an den durch die gespeicherte Client-Adressinformation identifizierten, anderen ausgewählten Client übermittelt.

7. Client (C) zur Ankopplung an einen Server (SRV), mit
a) einem Auswahlmodul (CSEL) zum Auswählen eines Clients aus mehreren Clients eines Subnetzes (SNA,..,SND),
b) einem Suchmodul (SM) zum Suchen nach ausgewählten Clients in mindestens einem anderen Subnetz sowie zum Suchen nach einem Server (SRV),
c) einem Speicher (MEM) zum Speichern einer von einem gefundenen Server (SRV) oder von einem gefundenen ausgewählten Client übermittelten, den Server (SRV) identifizierenden Server-Adressinformation (SA), und
d) einem Ausgabemodul (OUT) zum Übermitteln einer gespeicherten Server-Adressinformation (SA) zu mindestens einem anderen Client.

## Claims

1. Method for assigning clients (CSA, CSB, CSC, C1, C2, C3, CL) distributed over a number of subnetworks (SNA,..,SND) to a server (SRV), in which
a) one of the clients is selected in a relevant subnetwork (SNA,..,SND), and
b) a relevant selected client (CSA, CSB, CSC)
I) searches across subnetworks for other selected clients as well as for the server (SRV),
ii) on finding the server (SRV), stores server address information identi fying this server (SA),
iii)on finding another selected client, queries the server address information (SA) from this and stores it on receipt, as well as
iv) transmits the stored server address information (SA) to at least one other client (CSA, CSB, CSC, C1, C2, C3, CL).

2. Method according to claim 1,
in which
the transfer of the stored server address information (SA) to the at least one other client is initiated by a query (QMA1, QMB1, QMB2) originating from this client.

3. Method in accordance with one of the previous claims,
**characterized in that**,
the client selection in a subnetwork (SNA,..,SND) is undertaken by its clients.

4. Method in accordance with one of the previous claims,
**characterized in that**,
the selected client (CSB), on finding a non-selected client (C3), causes the latter to transfer to the selected client (CSA) in its subnetwork (SNA) a query (IM) of the server address information (SA).

5. Method in accordance with one of the previous claims,
**characterized in that**,
the selected client, on finding another selected client, stores client address information identifying the latter.

6. Method according to claim 5,
**characterized in that**
the selected client, as a result of receiving the server address information (SA), transfers this to the other selected client identified by the stored client address information.

7. Client (C) for coupling to a server (SRV), with
a) a selection module (CSEL) for selecting a client from a number of clients of a subnetwork (SNA,..,SND),
b) a search module (SM) for searching for selected clients in at least one other subnetwork as well as for searching for a server (SRV),
c) a memory (MEM) for storing server address information (SA) transmitted from a found server (SRV) or a found selected client identifying the server (SRV), and
d) an output module (OUT) for transmitting stored server address information (SA) to at least one other client.

## Revendications

1. Procédé d'affectation de clients (CSA, CSB, CSC, C1, C2, C3, CL) répartis sur plusieurs sous-réseaux (SNA, ..., SND) à un serveur (SRV), dans lequel
a) l'un des clients est sélectionné dans un sous-réseau respectif (SNA,..., SND), et
b) un client respectivement sélectionné (CSA, CSB, CSC)
i) cherche d'autres clients sélectionnés ainsi que le serveur (SRV), au-delà du sous-réseau,
ii) mémorise, lorsqu'il a trouvé le serveur (SRV), une information d'adresse du serveur (SA) identifiant celui-ci,
iii) demande, lorsqu'il trouve un autre client sélectionné, l'information d'adresse de serveur (SA) auprès de ce client et la mémorise à sa réception, ainsi que
iv) transmet l'information d'adresse de serveur (SA) à au moins un autre client (CSA, CSB, CSC, C1, C2, C3, CL).

2. Procédé selon la revendication 1,
**caractérisé en ce**
**que** la transmission de l'information d'adresse de serveur mémorisée (SA) est incitée vers l'au moins un autre client au moyen d'une demande (QMA1, QMB1, QMB2) partant de ce client.

3. Procédé selon l'une quelconque des revendications précédentes,
**caractérisé en ce**
**que** la sélection de client est exécutée dans un sous-réseau (SNA, ..., SND) par les clients de ce sous-réseau.

4. Procédé selon l'une quelconque des revendications précédentes,
**caractérisé en ce**
**que** le client sélectionné (CSB), lorsqu'il a trouvé un client non sélectionné (C3), incite celui-ci à transmettre une demande (IM) de l'information d'adresse de serveur (SA) au client (CSA) sélectionné dans le sous-réseau (SNA) du client sélectionné.

5. Procédé selon l'une quelconque des revendications précédentes,
**caractérisé en ce**
**que** le client sélectionné, lorsqu'il a trouvé un autre client sélectionné, mémorise une information d'adresse de client identifiant ce dernier.

6. Procédé selon la revendication 5,
**caractérisé en ce**
**que** le client sélectionné, suite à la réception de l'information d'adresse de serveur (SA), transmet celle-ci à l'autre client sélectionné, identifié au moyen de l'information d'adresse de client mémorisée.

7. Client (C) destiné à être couplé à un serveur (SRV), comprenant
a) un module de sélection (CSEL) pour sélectionner un client parmi plusieurs clients d'un sous-réseau (SNA, ... SND),
b) un module de recherche (SM) pour chercher des clients sélectionnés dans au moins un autre sous-réseau ainsi que pour chercher un serveur (SRV),
c) une mémoire (MEM) pour mémoriser une information d'adresse de serveur (SA) transmise par un serveur trouvé (SRV) ou par un client sélectionné trouvé, identifiant le serveur (SRV), et
d) un module de sortie (OUT) pour transmettre une information d'adresse de serveur mémorisée (SA) à au moins un autre client.
